# EUROPEAN PATENT APPLICATION

(11) **EP 2 862 731 A1**
(43) Date of publication of application: **22.04.2015**
(21) Application number: 13188794.5
(22) Date of filing: 15.10.2013
(51) Int. Cl.: B60C 23/04, B60C 23/06

(54) **Tire pressure sensor malfunction detection method and system**

(71) Applicant: Continental Automotive GmbH, 30165 Hannover (DE)
(72) Inventor: Cimponeriu, Andrei, 300194 Timisoara (RO)

(57) **Abstract**

A tire pressure monitoring system (TPMS) pressure sensor malfunction detection method consists of checking that, when the vehicle is in motion, the pressure values measured by the pressure sensor include small variations or oscillations, such that the value of a measured pressure data parameter is larger than a threshold corresponding to the regular noise of the pressure transducer.

A system to detect malfunction of the pressure sensor includes, besides the pressure sensor and other standard components of a TMPS, a motion sensor, a motion data processing, a pressure data processing and analysis unit, a malfunction decision possibly a wheel localization unit and a malfunction warning signal transmitter.

Among others, a particular embodiment of the invention discloses a TPMS wheel unit that is self diagnosing its pressure sensor malfunction.

## Description

### BACKGROUND OF THE INVENTION

### Field of the Invention

The present invention concerns a method and a system to detect malfunction of the pressure sensor of the wheel unit (WU) of a tire pressure monitoring system (TPMS).

### Description of Related Art

From the prior art directly measuring tire pressure monitoring systems are known. In these systems wheel units are arranged at the wheels to measure a pressure within the tire using a pressure transducer. The pressure readings of the wheel units are wirelessly transmitted to a receiver on the vehicle side. Due to the TPMS it becomes possible to quickly notice underinflated tires, such that the safety is increased. Moreover, if the tires are operated at an optimal pressure, fuel is saved.

Experience with TPMS shows that sometimes the pressure sensors of the wheel units fail. When they do so, their measured pressure no longer corresponds to the actual tire pressure. Instead, the pressure value provided by the defective pressure sensor in general becomes a constant. If this value is a plausible pressure value, the malfunction of the pressure sensor is not noticed. However, it is required by law that TPMS malfunction be detected and transmitted to the driver (UD Dept. of Transportation, Federal Motor Vehiclerier Safety Administration, Standard No. 138; Tire pressure monitoring systems, §571.138 S4.4). It can be understood that this law is applicable also to such cases. Given the importance of tire pressure monitoring, a variety of pressure monitoring sensors and systems have been proposed. Of them, only very few claim to allow the detection of the pressure sensor malfunction.

The early US4334428 (1979) discloses a pressure sensor which claims to allow to detect malfunction. It involves a variable inductor whose core is, within a bellows, able to move according to the tire pressure. That inductor is part of a resonating circuit, whose resonating frequency is a function of the tire pressure. The positions of the core and the values of the resonating frequency normally fall within a predetermined range. According to Claim 21 of the patent, a failure of the sensor means movement of the core and of the resonating frequency outside the normal position range. By detecting an abnormal frequency, pressure sensor failure is claimed to be detected. It can be noted that this device involves a moving part - the core, which, for instance because of aging of the bellows, is prone to getting stuck in some fixed position. Thus, a constant and possibly plausible pressure can be indicated and the failure detection of the sensor can effectively fail.

A later patent, US5814725 (1998) describes a tire pressure sensor that uses a diaphragm, a piston, a rotating shaft and an annular magnet. The deformation of the diaphragm and the position of the piston, which then translate into an angular position of the magnet, reciprocate the tire pressure. The position of the magnet is detected by a Hall element. Underpressure is detected as large positive voltage generated by the Hall element; overpressure corresponds to large negative voltage and normal pressures correspond to values that are in-between. The patent claims that malfunction of the sensor can be detected when the Hall element generates no voltage. However, a skilled person in the field can confirm that, if the Hall element generates no voltage, this can correspond to a malfunction of the Hall element itself, or to a distance between the Hall element and the magnet that is too large. These kinds of malfunctions are indeed detected. But besides these, the diaphragm, the piston, the rotating shaft and the magnet are moving mechanical parts. They can thus get stuck in some position where the pressure appears correct, but there is no further dependence between pressure and position. This failure, which is actually a failure of the sensor itself and is more likely to occur than the failure of the Hall sensor, can not be detected.

Modern TPMS use microelectromechanical systems (MEMS) sensors, which convert pressure to mechanical movement of a bending part of silicon or ceramics and eventually to an electrical signal. Even if the mechanical movement they eventually involve is minute, these sensors are too prone to the same type of failure.

It can be noted that other kinds of the TPMS pressure sensor malfunction, similar to the Hall sensor failure or of other origin, are expected to result in a zero, a full-scale or some other value that is constant.

On the other hand, US 7260984B2 shows that pressure within the rolling tire displays small oscillations according to the angular frequency of the tire. However, that patent deals with piezoelectric power harvesting in TPMS and is does not target or claim failure detection in TPMS pressure sensors.

### SUMMARY OF THE INVENTION

It is one object of the present invention to provide a method and a system to detect malfunction of the pressure sensor of a wheel unit of a tire pressure monitoring system in cases when the pressure sensor is subject to a malfunction according to which it reports a false constant, apparently normal pressure, or any other constant value.

This object is accomplished by the subject matter of the independent claims. Further embodiments are given by the features of the dependent claims.

### BRIEF DESCRIPTION OF THE DRAWINGS

- Figure 1: illustrates a tire pressure monitoring system;
- Figure 2: shows a tire with a tire-glued WU of a TPMS;
- Figure 3: illustrates the fluctuation of the pressure in a tire when the tire is rolling on the ground;
- Figure 4a: shows the fluctuation of the pressure in a rolling tire in the frequency domain for a vehicle moving at 35 miles per hour;
- Figure 4b: shows the fluctuation of the pressure in a rolling tire in the frequency domain for a vehicle moving at 60 miles per hour;
- Figure 5: shows one embodiment of the method for detecting a malfunction of a pressure sensor of the WU;
- Figure 6: shows one embodiment of the pressure sensor malfunction detection system, built mainly in the wheel unit;
- Figure 7: shows one embodiment of the pressure sensor malfunction detection system shared between the wheel unit and a body control unit.

In the following description, irrespective of figure number identical elements or elements having identical effects are denoted with the same reference signs, if not otherwise indicated.

### DETAILED DESCRIPTION OF THE PREFERRED EMBODIMENTS

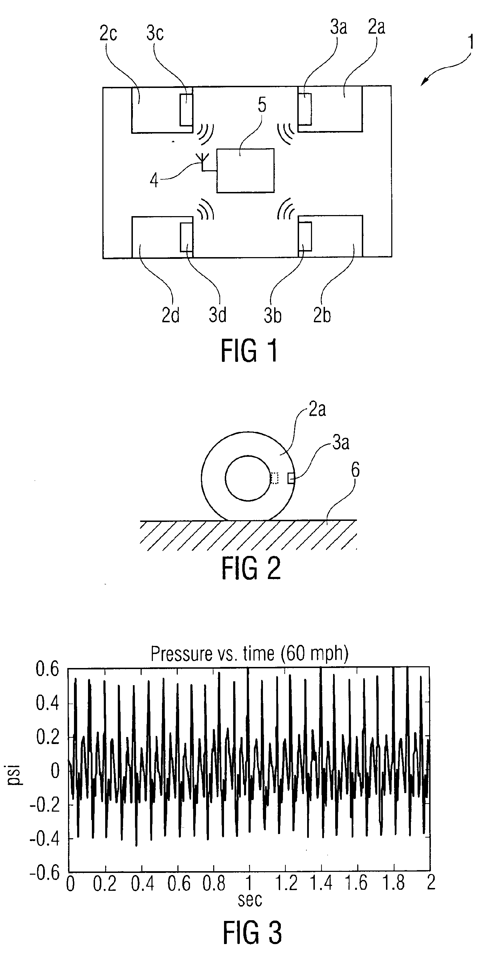

With reference to Figure **1****,** a TPMS consists of wheel units (WU's) **3a-d** mounted on the wheels **2a-d** of a vehicle **1** (in particular a car) and of a body control unit (BCU) **5,** which, by means of one or several antennas **4** receive the signals emitted by the wheel units. The main purpose of the system is to monitor tire pressure, but other more advanced functions, such as wheel localization or load detection can also be present.

With reference to Figure **2****,** wheel units can be glued to the tire or otherwise be mounted to the tire in order to measure the tire pressure. While the vehicle is running, the wheels are rotating on a ground surface **6.** Besides the constant pressure inside the tire, upon getting and loosing contact with the ground, a temporary pressure wave occurs at the interior surface of the tire. An alternative position for the wheel unit is given in dotted lines on the inner side of the wheel while reference sign 3a shows a wheel unit at an outer rim of the wheel.

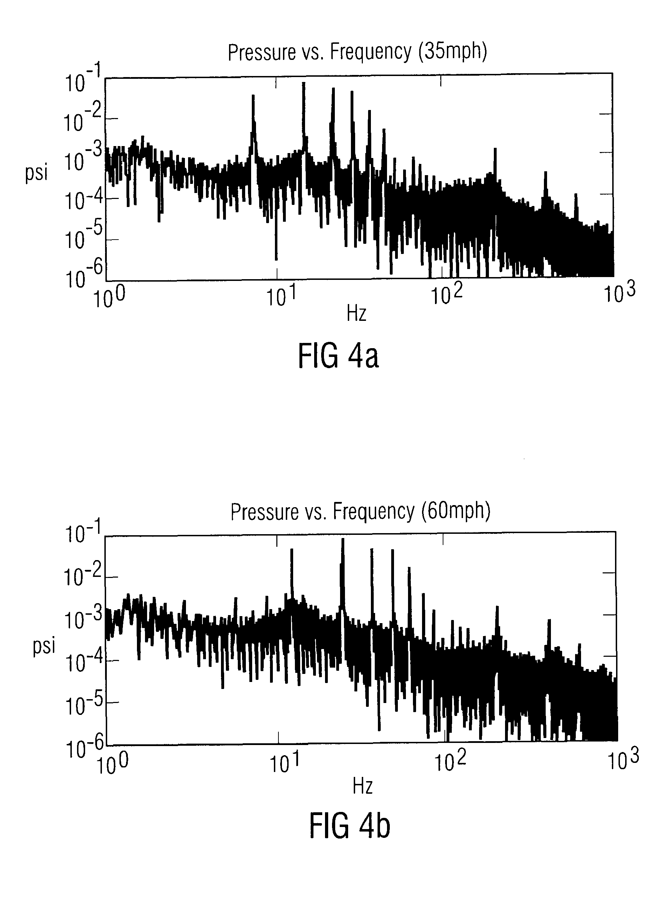

Figures **3****,** **4a** and **4b** are taken from US 7260984 B2. Figure **3** shows changes in pressure as measured by a pressure sensor, during rotation of the tire. On the axis of the abscissae the time in seconds is denoted, while on the axis of ordinate the pound-force per square inch (psi; 1 psi ≅ 6.89 kPa) is plotted. The pressure fluctuations are shown for a vehicle travelling at a speed of 60 miles per hour (approximately 96 km/h).

Using spectrum analysis, the pressure changes shown in Figure **3** can be resolved into various frequencies with various amplitudes. Exemplary plots of amplitude versus frequency of pressure changes generated within a rotating tire are shown in the Figure **4a** for a vehicle travelling at a speed of 35 miles per hour (approximately 56 km/h) and in the Figure **4b** for a vehicle travelling at the speed of 60 miles per hour (compare US 7260984 B2). In the Figures **4a** and **4b** on the axis of the abscissae the frequency in hertz is denoted, while on the axis of ordinate the pound-force per square inch is shown. The Figures **4a** and **4b** show that there are a number of amplitude peaks of frequencies of pressure changes generated within the rotating tire. The pressure fluctuations can be exploited to determine whether the pressure sensor works correctly or not.

A preferred embodiment comprises a TPMS pressure sensor malfunction detection method that consists of checking that, when the vehicle is in motion and the tire is rolling on the ground, the pressure values measured by the pressure sensor include small variations or oscillations according to the angular rotation speed of the wheel, such that the value of a measured pressure data parameter is larger than a threshold corresponding to the regular noise of the pressure transducer.

Particular embodiments of the method include various approaches that are possible for pressure signal processing/analysis.

In particular, pressure signal processing and/or analysis can depend on the type of motion information.

Further, the following information can be analyzed and/or processed:
- basic information, such as vehicle moving or wheel rotating or not;
- standard information, such as vehicle speed or angular speed of the wheels; from this, also basic information can be derived;
- advanced information, such as angle reference for each of the rotating wheels or other signals having the same periodicity as the wheel; from this, both standard and basic information can be derived.

The signal processing and/or analysis approaches can provide increasing degrees of robustness but also of complexity and may be:
- A very easy approach is to evaluate the peak-to-peak variation of the samples, calculated as the peak to peak value of the pressure data from which the average value was subtracted. It may be used, for example, if the pressure signal is clean, i.e. noiseless; only basic motion information is needed;
- A slightly more complex way is to calculate the standard deviation of the samples, with the average subtracted; only basic motion information is needed;
- More involved and robust ways are to calculate the autocorrelation/autocovariance or to perform spectral/Fourier analysis. This way allows to detect oscillations, but also to estimate the rotation period or angular speed of the wheel. Only basic motion information is needed; however, if vehicle speed or wheel angular speed is available, the estimated angular speed can be compared and validated using the known angular speed or rotation period;
- If advanced motion information is available, the statistical approach of cross-correlation/cross-covariance can be used. Alternatively, the signal processing or instrumentation technique known as synchronous detection can be used.

In all cases, if the noise is large, the number of samples can be increased.

According to particular embodiments, the malfunction detection threshold can be:
- a constant value according to an a priori assumed noise value; an optimal value can be calculated using detection theory known in statistics and signal processing;
- a constant function: if the pressure sensor is nonlinear, transducer sensitivity and/or noise can depend on measured pressure value; for this case, optimal thresholds can be calculated for several pressure values, making up a function, possibly stored in a look-up table and used, possibly by interpolation, at the time of failure detection; the same approach can be applied for dependence on temperature, should there be a temperature sensor close to the pressure sensor;
- an adaptive value: if the pressure sensor noise varies slowly, for instance with the age of the sensor, noise level can be measured when the tire is still, and used to calculate a slowly changing / adaptive malfunction threshold that tracks sensor aging; this technique can be applied also in the case a function is used.

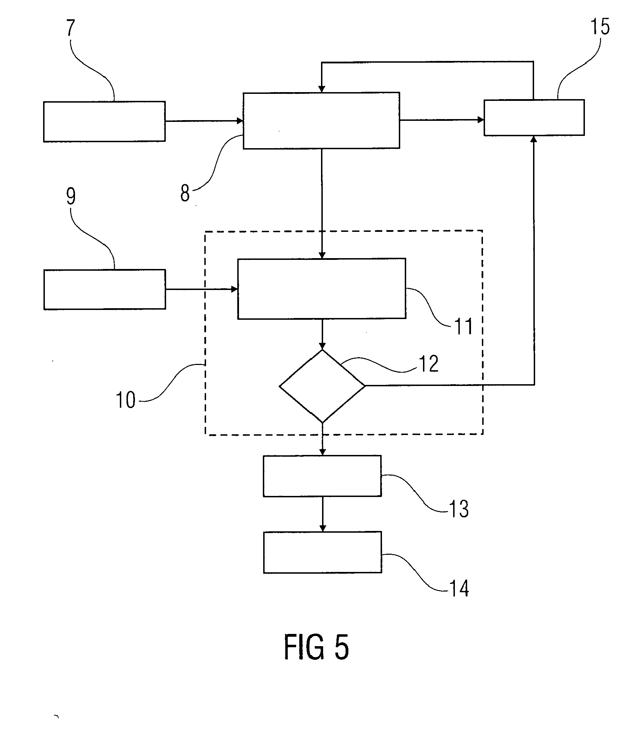

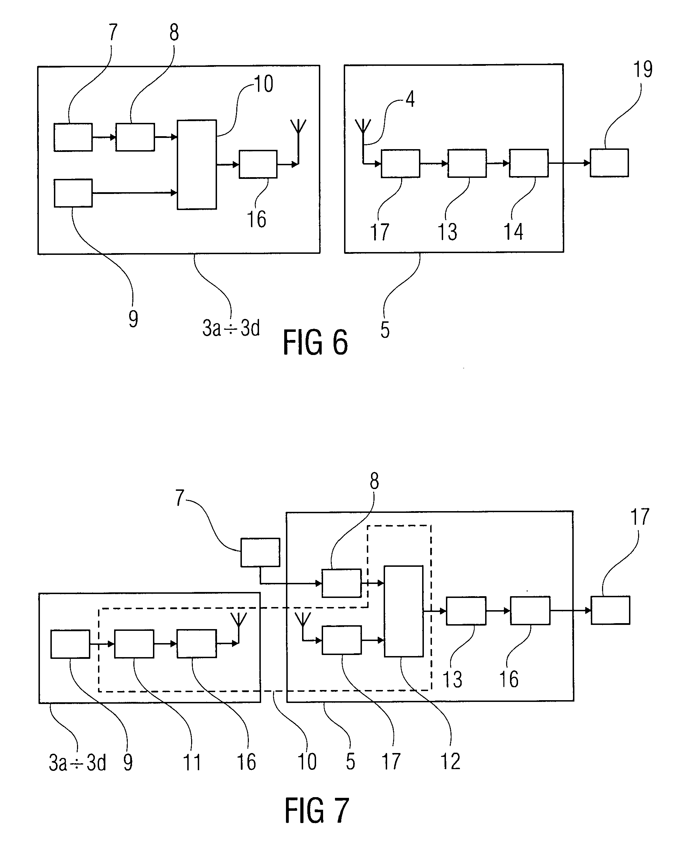

A preferred embodiment of a generic system to detect malfunction of the pressure sensor, is shown in Figure **5****.** A motion sensor **7** acquires raw data that are processed by a motion data processing and detection unit **8,** which determines whether the tire to which the wheel unit is mounted or the vehicle is in motion. In case the vehicle is not moving, delay unit **15,** possibly shared with the TPMS, waits a prescribed time for the next pressure measurement session. If the wheel is rotating, data from a pressure sensor **9,** mounted on a tire, is collected and a malfunction detection unit **10** is activated. The pressure sensor should have a bandwidth large enough to include frequencies as shown in Figures **4a** and **4b****,** specifically at least the fundamental frequency corresponding to maximum vehicle speed. Also, its resolution should be such that the variations showed in Figure **3** can be captured. The malfunction detection unit **10** consists of a data processing/ analysis unit **11** and a malfunction decision unit **12.** Pressure data processing and analysis results in a pressure data parameter. If needed, data processing performed in **11** can include motion data. The malfunction decision unit **12** compares the pressure data parameter with a predetermined threshold, which is a function of the regular pressure sensor noise, which is present when the tire is not rolling. One outcome of the decision unit **12** can be that the data display normal pressure variations or oscillations, meaning that the pressure sensor is working properly. In this case, delay unit **15,** possibly shared with the TPMS, waits until a new measurement session starts and the process is retaken. Another outcome of the decision unit **12** can be that, within expected noise, the pressure data are constant and the pressure sensor malfunctions. In that case, an optional wheel identification unit **15,** possibly belonging to the TPMS localization function, determines the wheel from which the malfunction decision originates. Eventually, a malfunction warning signal transmitter **14,** possibly shared with the TPMS, sends a malfunction warning signal to the vehicle driver's display. TPMS and their failure detection systems are shared between WU's and a BCU on the vehicle. Consequently, a means to communicate data from the WU to the BCU is also present. To keep the figure as generic as possible, this communication was not represented here. However, such means are represented in the more specific Figures **6** and **7****.**

According to particular embodiments, the sensor malfunction detection system can use, as motion sensor **7,** inputs from one of several motion or motion-related sensors or systems, existing on the vehicle or its own sensor, as used to provide additional information for advanced functions of the TPMS:
- an accelerometer that measures the radial acceleration on the WU; (acceleration transducers can be positioned at the positions, where wheel units are shown in figure 2, e.g. at the outer or inner rim of the wheel)
- a piezoelectric bending or shock transducer (generally, any sensor arranged for detecting tire contact with the road, preferably mounted to the wheel like unit WU);
- vehicle tachometer;
- vehicle position and speed provided by a GPS system;
- vehicle longitudinal acceleration, provided by the engine or another vehicle system;
- accelerometer for longitudinal direction of the vehicle, specifically mounted on the BCU, in case the TPMS is not to be connected to the vehicle information bus;
- wheel rotation angle / ticks or angular speed of the wheels, provided by a vehicle ABS system.

According to particular embodiments, the pressure data processing and analysis unit **11** can implement one or more of the processing ways presented earlier, or similar ones:
- calculate the peak-to-peak value of pressure data from which the average value was subtracted;
- calculate the standard deviation of pressure data from which the average value was subtracted;
- calculate autocorrelation/autocovariance of pressure data,
- perform spectral/Fourier analysis of pressure data;
- calculate cross-correlation/cross-covariance between pressure and motion angular data from a wheel motion sensor;
- perform synchronous detection of pressure data from which the average value was subtracted, using a phase angular reference from a wheel motion sensor.

Since the TPMS consists of the WU's and a BCU, the malfunction detection system is naturally built on the two components. Accordingly, and also according to the specific motion sensor that is used, the generic system described earlier can be built in several ways. Two examples are given: one where the malfunction detection is performed on the WU and the BCU only includes units that necessarily belong to it, and one where the WU is as simple as possible and the malfunction detection unit is mainly on the BCU. Between these, other structures are possible and are equally within the scope of the method and system described herein.

A preferred embodiment, where most of the system and the entire malfunction detection unit **10** is built in the WU is shown in Figure **6****.** Each of the wheel units **3a-3d** comprise a pressure sensor **9.** It provides data to the pressure data processing and analysis unit **(11,** not shown) inside the malfunction detection unit **10.** On the other hand, a motion sensor **7** and a motion data processing and detection unit **8** are also present. Processed pressure and motion data are inputs to the malfunction decision unit **(12,** not shown) inside the malfunction detection unit **10.** If a malfunction is detected, the wheel unit transmitter **16** and its antenna sends a message to the BCU. The message is taken by the BCU antenna **4** and its receiver **17** to an optional wheel identification unit **13** and, via a malfunction message transmitter **14,** to a vehicle driver display **19.** Thus, the malfunction detection is performed on the WU and the BCU role is minimal. Elements **16, 4** and **17** make up the communication between the WU and the BCU. Together with the pressure sensor **9** and the wheel identification unit **13,** they may be parts of the original TPMS on which the malfunction detection system is built.

It can be noted that Figure **6** also defines a WU that includes a pressure and a motion sensor and is self-diagnosing its pressure sensor malfunction. This is possible because only information that is locally available on the wheel unit is necessary for diagnosis. Of course, other TPMS processes are vehicleried out by the WU, for example, a process that measures the tire pressure and sends it to the vehicle-based receiver.

A preferred embodiment of the system to detect malfunction of the TPMS pressure sensor, where the system is shared between the WU and the BCU maximally towards the latter, is shown in Figure **7****.** There, the WU's **3a-3d** only comprise a pressure sensor **9,** a pressure data processing and analysis unit **11** and a transmitter **16.** It is the BCU that detects the motion, by using the processed pressure signal received trough receiver **17,** and the motion signal provided by a motion sensor **7** or an input from a motion-related sensor or system on the vehicle and processed by the motion data processing unit **8.** Thus, of the malfunction detection unit **10,** the pressure processing/analysis unit **11** is on the WU and the decision unit **12** is on the BCU. If a malfunction is detected, the malfunctioning wheel may be identified by the wheel identification unit **13.** The malfunction message is sent, via the malfunction message transmitter **16,** to the vehicle driver display **17.** The pressure sensor **9,** the transmitter **16,** the receiver **17,** their antennae, and the wheel identification unit may be parts of the original TPMS on which the malfunction detection system is built.

In particular embodiments of the systems in Figures **5****,** **6** or **7****,** specific units like the motion data processing unit **8** and the components of the pressure sensor malfunction detection unit **10,** specifically the pressure data processing and analysis unit **11,** and the malfunction decision unit **12,** can be implemented as hardware units. Alternatively, some or all of this can be implemented as software components running on microcontrollers on the WU and/or the BCU.

Particular embodiments of the systems in Figures **6** or **7** may use ways to transmit signals from the WU to the BCU that are different than radio frequency transmission. Such ways may be, but are not limited to: optical, ultrasound, magnetic field. In those cases the transmitter, transmitting antenna, receiving antenna and the receiver can be designed according to the properties of the specific transmission way.

The explanations with regard to the figures and embodiments should be understood in illustrative, rather than in a restrictive sense. Modifications may be made to the embodiments without departing from the scope of the invention as set forth in the independent and dependent claims.

### Reference signs for the figures

- 1: vehicle
- 2a-2d: wheels
- 3a-3d: wheel units (WU's)
- 4: body control unit receiving antenna
- 5: body control unit (BCU)
- 6: ground surface
- 7: Motion sensor
- 8: Motion data processing and detection unit
- 9: Pressure sensor
- 10: Malfunction detection unit
- 11: Pressure data processing/analysis unit
- 12: Malfunction decision
- 13: Wheel identification unit
- 14: Malfunction warning signal transmitter
- 15: Delay unit
- 16: Wheel unit transmitter and its antenna
- 17: Body control unit receiver
- 18: Wheel identification unit
- 19: Vehicle driver display

## Claims

1. TPMS pressure sensor malfunction detection method **characterized by** checking that, when the vehicle (1) is in motion and the tire is rolling on the ground, the pressure values measured by the pressure sensor (9) include small variations or oscillations according to the angular rotation speed of the wheel (2a-d), such that the value of a pressure data parameter is larger than a threshold corresponding to the regular noise of the pressure transducer.

2. TPMS pressure sensor malfunction detection method according to claim 1, where the pressure sensor parameter is computed in one or more of the following ways:
- peak-to-peak variation of pressure data from which the average value was subtracted;
- standard deviation of pressure data from which the average value was subtracted;
- autocorrelation/autocovariance of pressure data;
- spectral/Fourier analysis of pressure data;
- cross-correlation/cross-covariance between pressure and motion angular data from a wheel motion sensor;
- synchronous detection of pressure data from which the average value was subtracted, using a phase angular reference from a wheel motion sensor.

3. TPMS pressure sensor malfunction detection method according to claim 1, where the malfunction detection threshold is:
- a constant value according to an a priori assumed noise value and constant sensor sensitivity, possibly optimally calculated using detection theory;
- a constant function, which takes into account dependence of the optimal threshold on pressure, possibly temperature and other factors;
- an adaptive value or function, which is slowly changing, calculated using sensor noise measured when the wheel is standing still, to account for sensor aging or other slow processes.

4. TPMS pressure sensor malfunction detection system comprising:
- a pressure sensor (9) mounted on a wheel unit;
- a failure detection unit (10) for detecting malfunction of the pressure sensor (9) by comparing a pressure values parameter with a predetermined threshold;
- a motion sensor (7) and a motion data processing and detection unit (8) to determine whether the tire to which the wheel unit (3a-d) is mounted or the vehicle is in motion and to activate the failure detection unit;
- means to transmit data from the wheel unit (3a-3d) to a body control unit, possibly belonging to the TPMS localization function;
- an optional wheel identification unit (13) that identifies the malfunctioning wheel, possibly belonging to the TPMS localization function;
- a warning unit that sends the warning signal to the driver display.

5. TPMS pressure sensor malfunction detection system according to claim 4, where the motion information is provided by one of the following:
- acceleration sensor measuring radial acceleration of the WU;
- transducer that detects tire contact with the road;
- a tachometer;
- a GPS system;
- vehicle longitudinal acceleration;
- individual wheels' rotation angle or angular speed.

6. TPMS pressure sensor malfunction detection system according to claim 4, where the pressure data processing and analysis unit (11) implements one or more of the following, or performs other similar calculations:
- calculate the peak-to-peak value of pressure data from which the average value was subtracted;
- calculate the standard deviation of pressure data from which the average value was subtracted;
- calculate autocorrelation/autocovariance of pressure data;
- perform spectral/Fourier analysis of pressure data;
- calculate cross-correlation/cross-covariance between pressure and motion angular data from a wheel motion sensor;
- perform synchronous detection of pressure data from which the average value was subtracted, using a phase angular reference from a wheel motion sensor.

7. TPMS pressure sensor malfunction detection system according to claim 4, distributed between the wheel unit (3a-d) and a body control unit (5), where motion detection and most of the processing takes place on the wheel unit and the wheel unit (3a-d) comprises a pressure sensor, a pressure data analysis unit, a motion sensor, a motion data processing and detection unit, a malfunction decision unit, a transmitter, a receiver and their antennae, an optional wheel identification unit and a malfunction message transmitter.

8. TPMS pressure sensor malfunction detection system according to claim 4, where the wheel unit (3a-d) is self diagnosing its pressure sensor malfunction, consisting of a pressure sensor (9), a pressure data analysis unit (11), a motion sensor (7), a motion data processing and detection unit (8), a malfunction detection unit (10) and a transmitter.

9. TPMS pressure sensor malfunction detection system according to claim 4, distributed between the wheel unit and a body control unit, where the wheel unit is as simple as possible, including the pressure sensor (9), the pressure data processing and analysis unit (11) and a transmitter, while the body control unit (5) comprises a motion sensor (7) or an input from a motion-related sensor or system on the vehicle, a motion data processing unit, a malfunction decision unit (10), possibly a wheel identification unit (13), and a malfunction message transmitter.

10. TPMS pressure sensor malfunction detection system according to claim 4, where specific units can be implemented as hardware units or as software components running on microcontrollers.

11. TPMS pressure sensor malfunction detection system according to claim 4, distributed between a wheel unit (3a-d) and a body control unit (5), where the communication between the two components can use, besides radio frequency transmission, other ways like but not limited to optical, ultrasound, magnetic field.
